# EUROPÄISCHE PATENTSCHRIFT

(11) **EP 1 603 744 B1**
(45) Veröffentlichungstag und Bekanntmachung des Hinweises auf die Patenterteilung: **30.11.2011**
(21) Anmeldenummer: 04717623.5
(22) Anmeldetag: 05.03.2004
(51) Int. Cl.: B32B 17/10, C03C 17/22, E04D 3/06, E04F 10/00, G09F 13/20, F21V 21/00, A47F 3/00, E06B 3/66

(54) **TRANSPARENTES ELEMENT ALS VERBUNDGLASELEMENT**
TRANSPARENT ELEMENT IN THE FORM OF A LAMINATED GLAZING
ELEMENT TRANSPARENT SOUS FORME DE VITRAGE FEUILLETÉ

(30) Priorität: 07.03.2003 EP 03005082
(43) Veröffentlichungstag der Anmeldung: 14.12.2005
(73) Patentinhaber: AGC Glass Europe, 1170 Brussels (BE)
(72) Erfinder: DÖPPNER, Christoph, 36124 Eichenzell (DE)
(74) Vertreter: Patentanwälte Ruff, Wilhelm, Beier, Dauster & Partner
(86) Internationale Anmeldenummer: PCT/EP2004/002266
(87) Internationale Veröffentlichungsnummer: WO 2004/080712

(56) Entgegenhaltungen:
- EP-A- 0 900 971
- EP-A- 1 081 425
- EP-A- 1 154 199
- EP-A- 1 346 823
- WO-A1-2005/054915
- WO-A1-2005/054915
- DE-A- 4 415 457
- DE-C- 4 208 922
- DE-U- 8 529 956
- DE-U- 8 710 619
- DE-U- 9 215 662
- DE-U- 20 019 874
- DE-U- 29 716 214
- US-A- 2 644 065
- "Leuchtende Bilder in Glasscheiben" HTTP:, [Online] 25. Oktober 2002 (2002-10-25), XP002241074 Gefunden im Internet: URL:www.schott.com/architecture/english/ne ws/press.html> [gefunden am 2003-05-13]

## Beschreibung

Die Erfindung betrifft ein transparentes Element, das als Verbundglaselement ausgebildet ist. Das transparente Element besitzt wenigstens eine transparente Scheibe.

Neben Fenstern gibt es eine Vielzahl weiterer Anwendungsbereiche für transparente Elemente, beispielsweise großflächige Glasfronten an Gebäuden, Schaufenster, Gebäudedachelemente usw. Insbesondere die neuere Architektur setzt verstärkt auf transparente Elemente, um Gebäude lebendiger erscheinen lassen.

Aus der EP 0900971 A1 ist es bekannt, auf einer Glasplatte Leuchtdioden zu befestigen, die über dünne und unsichtbare Leiterbahnen mit Strom versorgt werden. Die Dioden sind auf der gleichen Fläche der Glasplatte angebracht, auf der sich die Leuchtdioden befinden.

Die EP 0593940 A1 beschreibt eine Verbundglasscheibe mit einem eingelagerten Draht, der vom Rand der Scheibe her kontaktiert ist, wobei ein Steckkontakt auf der Glasfläche angebracht ist.

Die US 5 105 303 zeigt eine Verbundscheibe mit einer elektrochromatischen Zwischenschicht und die US 4 100 398 eine Verbundscheibe mit einer in der Zwischenschicht eingelagerten elektrischen Heizung.

Die US 5 533 289 beschreibt ein zwischen Scheiben eingelagertes elektroluminiszentes Element, das von dem Rand der Scheibe her versorgt wird.

Die EP 1 346 823 A1 beschreibt ein transparentes Verbundglaselement, in dem elektrische Zuleitungen zu einem integrierten elektrischen Leuchtmittel in Form einer LED oder Glühbirne zwischen den Scheiben des Verbundglaselementes enthalten sind.

Aus dem Artikel "Leuchtende Bilder in Glasscheiben" vom 25. Oktober 2002, XP 002241074, ist es ebenfalls bekannt, elektrische Leuchtmittel in Verbundglaselemente zu integrieren.

Die US-A-2644065 beschreibt ein Verbundglaselement in Form einer beheizbaren Windschutzscheibe. Ein Temperatursensor ist in einer Aussparung der transparenten Zwischenschicht als Medienverbraucher angeordnet, wobei dünne Drähte die elektrische Ansteuerung bilden.

Die DE 9215662 U beschreibt ein Glaselement in Form eines Spiegels. In bzw. vor einer Bohrung in der Glasplatte ist ein elektrisches Leuchtmittel angeordnet, das versorgt wird mittels Leiterbahnen aus Kupfer, die auf der abgewandten Seite des Spiegels angeordnet sind.

Die DE 8710619 U beschreibt die Einbettung von Leuchtdioden in einen Symbolträger, der als Guß- oder Spritzkörper ausgebildet ist. Dabei kann entweder ein Teil der LED frei aus dem Körper herausragen oder aber eingehüllt sein. Sie beleuchten den gesamten Symbolträger.

Die WO 2005/054915 A1 beschreibt ein Verbundglaselement mit einer Kunststoffzwischenschicht zwischen zwei Glasscheiben. Über einen von außen herangeführten Lichtleiter wird Licht in die Zwischenschicht geleitet. Lichtaustritte in Form von Steuzentren sind als spezielle Fasern oder farbige Partikel und somit allgemein als Diskontinuitäten ausgebildet und an der Oberfläche der Zwischenschicht zu den Innenseiten der beiden Glasscheiben innen angeordnet.

### Aufgabe und Lösung

Aufgabe der Erfindung ist es daher, ein transparentes Element zu schaf fen, das zusätzliche Anwendungsmöglichkeiten bietet.

Diese Aufgabe wird durch ein transparentes Element mit den Merkmalen des Anspruchs 1 gelöst.

Das erfindungsgemäße transparente Element zeichnet sich dadurch aus, dass es wenigstens eine Aufnahme für wenigstens einen Medienverbraucher besitzt. Die Medienzufuhr zur Versorgung des Medienverbrauchers ist in das transparente Element integriert, wobei die Medienzufuhr zwischen zwei Scheiben verläuft. Es ist auch denkbar, die Medienzufuhr in das Scheibenmaterial zu integrieren, beispielsweise es darin einzubetten.

Die Aufnahme ist vorzugsweise ein Durchbruch in einer von wenigstens zwei miteinander verbundenen Scheiben, zwischen denen die Medienzufuhr verläuft.

Das transparente Element ist vorzugsweise aus Glas. Es ist aber auch der Einsatz eines transparenten Kunststoffs, beispielsweise von Acrylglas möglich. Die wenigstens eine Scheibe des transparenten Elements ist vorzugsweise eben bzw. plan. Es sind jedoch auch Scheiben einsetzbar, die gekrümmte Bereiche aufweisen.

Der Medienverbraucher kann auch eine optische Einrichtung sein, beispielsweise eine Überwachungskamera. Das transparente Element kann beispielsweise ein Schaufenster sein, in das eine Beleuchtungseinrichtung mit mehreren Leuchten bzw. Lampen integriert ist. Dadurch ist eine Anstrahlung der Schaufensterauslage von außen, also vom Schaufenster her, möglich. Dies hat den Vorteil, dass der Betrachter nicht geblendet wird. Außerdem ist bei dieser Art von Anstrahlung das Platzangebot für die auszustellenden Waren größer, da die Beleuchtungseinrichtung nicht, wie bei herkömmlichen Schaufensterauslagen, direkt in der Auslagefläche befestigt ist, sondern im Schaufenster selber. Ferner ist es denkbar, dass das transparente Element zumindest ein Teil einer gläsernen Ladenpassage ist, beispielsweise eines Glasdachs, an dem eine oder mehrere Lautsprecher angebracht sind. Damit ist eine Beschallung von oben möglich.

Erfindungsgemäß ist der Medienverbraucher ein nicht-elektrischer Verbraucher und die Medienzuführung ist ein Lichtleiter, der einen Medienverbraucher in Form eines Lichtaustritts versorgt, der in einem Durchbruch einer der Scheiben angeordnet ist.

Vorzugsweise erfolgt die Medienzufuhr unsichtbar. Das transparente Element ist dabei frei von irgendwelchen sichtbaren Medienzuführleitungen, die sein Erscheinungsbild beeinträchtigen könnten.

Die Schicht kann in Form von relativ schmalen, beispielsweise wenige Millimeter breiten, Leiterbahnen aufgetragen sein. Alternativ ist eine vollflächige Beschichtung der Scheiben möglich, z. B. auf den zu einer isolierenden Zwischenschicht der Verbundscheibe gekehrten Innenseiten. Bevorzugt ist die Schicht eine transparente Folie auf Metallbasis bzw. eine metallisierende Folie. Die Leiterbahnen können dabei durch Folienstreifen gebildet werden.

Es sind erfindungsgemäß zwei miteinander verbindbare transparente Scheiben vorgesehen, die Medienzufuhr befindet sich zwischen den Scheiben. Das transparente Element kann beispielsweise ein Verbundglaselement sein, bei dem wenigstens zwei Scheiben mittels einer Gießharzschicht oder, besonders bevorzugt, durch eine transparente Folie, miteinander verklebt sind. Die Medienzufuhr kann dann in die Zwischenschicht eingebettet sein. Alternativ kann ein Verbundsicherheitsglaselement vorgesehen sein, bei dem wenigstens zwei Scheiben mittels einer Spezialfolie, einer sogenannten VSG-Folie, miteinander verbunden sind. Die Folie ist vorzugsweise aus Kunststoff, beispielsweise aus Polyvinylbutral (PVB).

Der Ausschnitt oder Durchbruch, der als Aufnahme für den Medienverbraucher ausgebildet ist, kann beispielsweise eine Bohrung oder eine Ausfräsung sein, in die beispielsweise im Falle einer Beleuchtungseinrichtung eine Fassung eingesetzt wird, die ihrerseits ein Leuchtmittel aufnimmt. Die Befestigung des Medienverbrauchers, beispielsweise dessen Fassung, kann mittels eines Klebers erfolgen. Es kann ein Zweikomponentenkleber und/oder ein UV-aushärtender Kleber eingesetzt werden, bzw. ein Zweikomponentenkleber mit UV-aushärtender Komponente. Im Falle einer unsichtbaren Medienzufuhr kann der Kleber ebenfalls transparent sein. Darüber hinaus ist es natürlich möglich, auch die Fassung der Beleuchtungseinrichtung transparent auszubilden. Bei mehreren Scheiben, beispielsweise einem Verbundglaselement, besitzt vorzugsweise mindestens eine Scheibe den wenigstens einen Ausschnitt, während mindestens eine weitere Scheibe ausschnittsfrei ist und damit als Berührungsschutz für den Medienverbraucher dienen kann.

Ein Vorteil der Anbringung des Verbrauchers in oder an einem Durchbruch ist seine Zugänglichkeit zur Auswechslung o. dgl.. Ferner ergeben sich dadurch weitere Anwendungsmöglichkeiten, z. B. bei wärme- oder schallerzeugenden Verbrauchern, wie Lautsprechern. Dabei kann es auch vorteilhaft sein, wenn auch in der zweiten Scheibe des Verbundelementes ein Durchbruch ist.

Es können auch drei transparente Scheiben vorgesehen sein, von denen zwei Außenscheiben sind und mindestens eine eine Mittelscheibe ist. Der Medienverbraucher kann dabei in einen Durchbruch der Mittelscheibe angebracht sein. Beispielsweise kann eine der Außenscheiben eine Isolierglasscheibe sein, die ihrerseits aus zwei Scheibenteilen besteht, die durch eine wärmedämmende Gasschicht voneinander getrennt sind.

Es ist möglich, dass bei mehreren Scheiben die einzelnen Scheiben durch ein Klemmsystem miteinander lösbar verbunden sind. Vorteilhaft ist es, eine Gummidichtung vorzusehen, mit der der Spalt zwischen den Scheiben abgedichtet werden kann. Es ist ein Austausch des Medienverbrauchers möglich, falls sich dieser zwischen den Scheiben befindet oder in eine Mittelscheibe integriert ist. Auch ist dadurch die Medienzufuhr für Reparaturen zugänglich.

Ein Gebäudedachelement kann zumindest teilweise aus einem transparenten Material bestehen und mindestens ein transparentes Element bilden oder mindestens ein scheibenförmiges transparentes Element z. B. mit einer Beleuchtungseinrichtung aufweisen. Das transparente Element bzw. das Dachelement kann aus einem transparenten Kunststoff oder aus Glas bestehen.

Wenn das transparente Element eine Isolierglasscheibe ist, kann wenigstens eine der Glasscheiben eine Verbundglasscheibe sein, die zwischen sich eine isolierende Kunststoffschicht aufweist.

Das Gebäudedachelement kann wenigstens einen Teil eines Vordachs bilden das sich beispielsweise am Eingangsbereich von Gebäuden befindet. Es ist möglich mehrere verschiedenartige Medienverbraucher in das Gebäudedachelement des Vordachs zu integrieren. Beispielsweise kann es sich um eine Beleuchtungseinrichtung mit wenigstens einer Leuchte handeln. Auch eine Überwachungseinrichtung mit wenigstens einer Überwachungskamera ist alternativ oder zusätzlich einsetzbar. Es ist auch möglich eine herkömmliche, nichtleuchtende Hausnummer, beispielsweise eine Hausnummerntafel, zu integrieren und durch ebenfalls im Vordach integrierte Strahler anzustrahlen.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Mehrere Ausführungsbeispiele, die allerdings nicht zu der beanspruchten Erfindung gehören, sind in den Zeichnungen dargestellt und werden im folgenden näher erläutert. In den Zeichnungen zeigen:
- Fig. 1: eine schematische Darstellung eines Längsschnitts durch ein transparentes Element,
- Fig. 2: eine schematische Darstellung eines Längsschnitts durch ein transparentes Element in Form einer Verbundglasscheibe,
- Fig. 3: eine schematische Draufsicht auf ein transparentes Element mit angedeuteter Medienzufuhr,
- Fig. 4: eine schematische Darstellung eines Längsschnitts durch ein transparentes Element mit einer Isolierglasscheibe,
- Fig. 5: eine Draufsicht auf ein transparentes Element,
- Fig. 5A: eine Draufsicht auf das transparente Element gemäß Fig. 5 mit alternativer Stromführung,
- Fig. 6: eine schematische Darstellung eines Vordaches eines Hauseingangs,
- Fig. 7 und 8: anders bestückte Vordächer gemäß Fig. 6,

- Fig. 9: die Dachkonstruktion eines Wintergartens, und
- Fig. 10: ein Fußgängerüberweg mit integrierten beleuchteten Dachelementen.

### Beschreibung bevorzugter Ausführungsbeispiele

Das transparente Element 6 wird im folgenden anhand eines Glaselements für ein Gebäudedach erläutert. Alternativ kann das transparente Element 6 auch aus transparentem Kunststoff bestehen, beispielsweise aus Acrylglas. Als Medienverbraucher ist ein elektrischer Verbraucher 7 in Form einer Beleuchtungseinrichtung mit einem Leuchtmittel 14 gewählt. Die Medienzufuhr ist demzufolge eine Stromzufuhr.

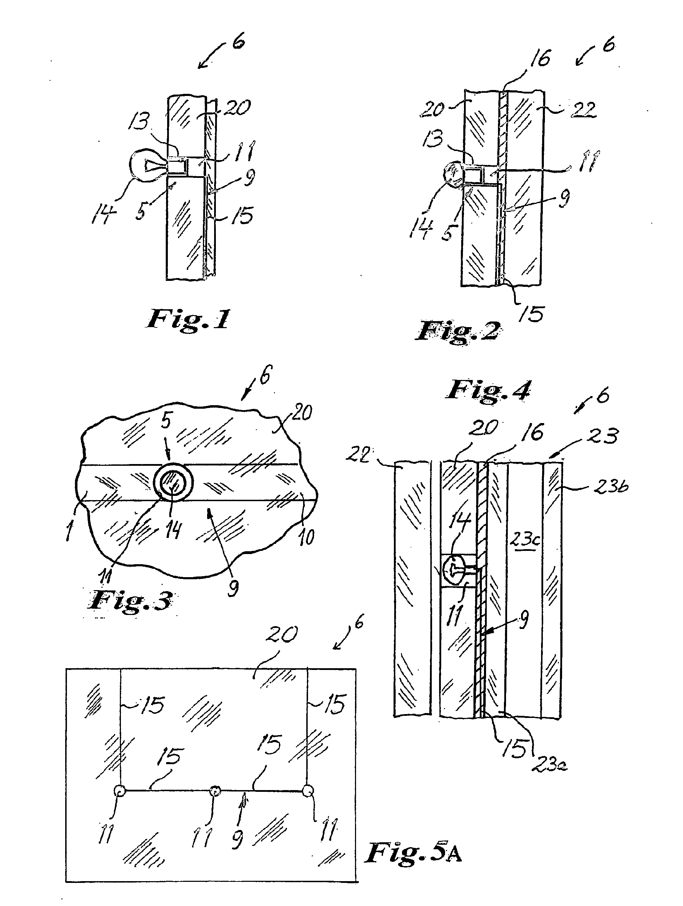

Fig. 1 zeigt ein transparentes Element 6 mit einer Scheibe 20 aus Einscheibenglas, z. B. Floatglas bzw. Spiegelglas. Die Scheibendicke liegt zwischen 1,5 mm und 19 mm, in Ausnahmefällen bis zu 24 mm. Die transparente Scheibe 20 besitzt einen Durchbruch 11, hier eine durchgehende Bohrung, die als Aufnahme 5 für das Leuchtmittel 14 dient. Es ist jedoch auch möglich, eine abgesetzte Bohrung anzubringen, bei der sich an eine größere Bohrung eine weitere Bohrung mit kleinerem Durchmesser anschließt, die ihrerseits zur Aufnahme 5 der Stromzufuhr 9 in Form eines Kabels oder Drahtes 15 dient. In die Bohrung 11 ist eine Fassung 13 eingeklebt, in die das Leuchtmittel 14 eingeschraubt werden kann. Zur Verklebung wird ein Kleber, beispielsweise ein UV-aushärtender Kleber, verwendet. Die Fassung 13 ist mit einer Stromzufuhr 9 in Form eines Kabels 15 verbunden. Das Kabel 15 kann ein Flachkabel, beispielsweise für Halogenstrahler, oder ein relativ dünner Draht mit ca. 0,05 mm Durchmesser ein als für LED-Diode ausgebildetes Leuchtmittel 14 sein. Das Kabel 15 verläuft vorzugsweise an der dem Leuchtmittel 14 gegenüberliegenden Seite der transparenten Scheibe 20 bis zur Höhe der Bohrung 11 und dann durch die Bohrung 11 hindurch bis zur Fassung 13, der Durchbruch 11 und die Rückseite der Scheibe 20 ist mit einer Schicht 23 abgedeckt, die z. B. aus einer Kunststoffschicht, -folie oder -scheibe bestehen kann und mit der Scheibe verklebt ist. Es kann auch eine Nut zur Aufnahme des Kabels 15 vorgesehen sein.

Anstelle des Kabels 15 kann als Stromführung eine transparente, elektrisch leitende und leistungsübertragende Schicht verwendet werden. Die Schicht kann eine Folie auf Metallbasis sein, die in Form von Leiterbahnen 10, 12 (Fig. 3) bildenden Folienstreifen an der Außenweite der transparenten Scheibe 20 aufgebraucht werden kann. Das Aufbringen einer transparenten Schicht bietet den Vorteil, dass die Stromzufuhr 9 nicht sichtbar ist und somit den Gesamteindruck des transparenten Elements 6 nicht stört.

In Fig. 2 ist als transparentes Element 6 ein Verbundglaselement dargestellt, das aus zwei Glasscheiben 20, 22 besteht. Die beiden Scheiben 20, 22 sind über eine Verbindungsschicht 16 miteinander verklebt. Bei der Verbindungsschicht 16 kann es sich um eine Schicht aus Gießharz handeln oder es können im Falle eines Verbundsicherheitsglases eine oder mehrere elastische, hochreißfeste Kunststoff-Folien, sogenannte VSG-Folien, eingesetzt werden. Als Kunststoff kann beispielsweise Polyvinylbutral (PVB) verwendet werden. Die Befestigung des als Leutdiodechtdiode ausgebildeten Leuchtmittels 14 mitsamt der Fassung 13 kann wie in Fig. 1 erfolgen. Auch eine Befestigung im Umfeld des Durchbruchs 11 ist möglich. Stromzuführende Drähte 15 sind in die Verbindungsschicht 16 eingebettet. Auch hier ist es möglich, eine transparente Schicht anzubringen, die isolierend von der Verbindungsschicht 16 abgedeckt wird.

Fig. 3 zeigt das Element 6 nach Figur 2 in Draufsicht. Die Stromzuführ7ung in Form von auf die Scheibe 20 an der der Verbindungsschicht zugekehrten Fläche aufgebrachten elektrisch leitenden transparenten streifenförmigen Schichten führt von beiden Seiten an das Leuchtmittel 14 heran und ist mit diesen kontaktiert. Bei mehreren Leuchtmitteln auf einer Scheibe können diese in Reihe oder parallel angeschlossen sein.

Fig. 4 zeigt ein transparentes Element 6 mit zwei transparenten Scheiben 20, 23, die über eine Verbindungsschicht 16 miteinander verklebt sind. Eine der beiden Scheiben ist eine Isolierglasscheibe 23. Die Isolierglasscheibe 23 ihrerseits besitzt zwei Isolierglasscheibenteile 23a, 23b, die durch einen gasgefüllten Zwischenraum 23c voneinander getrennt sind. Das Gas wirkt dabei als Wärmedämmung. Als Gas kann Luft oder ein Edelgas, beispielsweise Argon, Krypton oder Xenon eingesetzt werden. Auch Gasgemische sind möglich. Der Abstand der beiden Isolierglasscheibenteile 23a und 23b beträgt 5mm bis 25mm. Die Scheibe 20 besitzt eine Bohrung 11 zur Aufnahme eines Leuchtmittels. Das Leuchtmittel 14 ist vollständig in die Bohrung 11 integriert. Die Stromzufuhr kann gemäss Figur 2, 3 erfolgen. Ohne die Zugänglichkeit des Verbrauchers 14 zu verhindern kann eine zusätzliche Scheibe 22 mittels eines K!emmsystems vor die Scheibe 20 gesetzt werden. Auch wird dadurch eine Reparatur an der Stromzufuhr möglich, beispielsweise falls ein Wackelkontakt auftritt oder ein Kabel beschädigt ist.

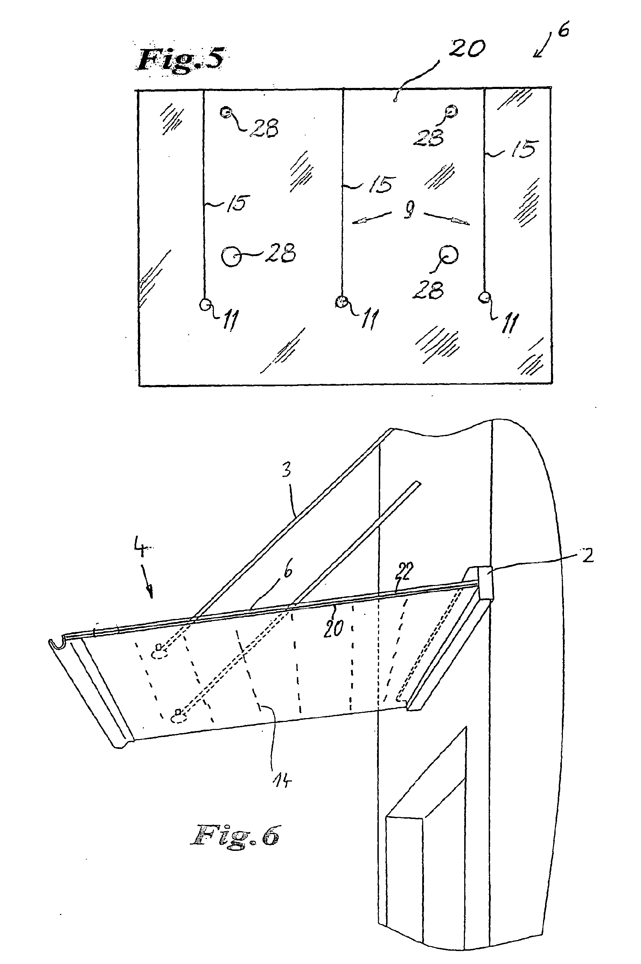

In Fig. 5 ist ein transparentes Element 6 dargestellt, bei dem die stromführenden Kabel 15 bewusst sichtbar angeordnet sind. Die sichtbaren Kabel 15 verlaufen ähnlich zu dem in Fig. 2 dargestellten Ausführungsbeispiel in der Verbindungsschicht 16 zwischen den Scheiben 20, 22 bis zur Höhe von Bohrungen 11 und durch diese hindurch, so dass sie mit Verbraucher 7 verbunden werden können. Es sind ferner weitere Bohrungen 28 vorgesehen, die zur Befestigung des transparenten Elements dienen, beispielsweise als Vordachglaselement mit Hilfe von Trägern oder Stangen. Die Bohrungen 28 können je nach Anwendung beliebig platziert werden.

Fig. 5A zeigt das transparente Element gemäss Figur 5 mit Stromführung 7 in Reihenschaltung.

Fig. 6 zeigt eine Hausfassade, an der ein transparentes Element 6 als Vordach 4 mit Hilfe einer Halterung 2 befestigt ist. Die Halterung 2 kann von Halterungsstangen 3 oder Seilen unterstützt werden, um höhere Dachlasten zu ermöglichen.

An der der Halterung 2 zugewandten Seite des Dachelementes 4 treten an den Stirnseiten des Dachelementes 4 zwei Leitungsanschlüsse heraus, die mit mindestens zwei in das Dachelement 4 integrierten Leiterbahnen verbunden sind, die auf den Scheiben 20, 22 des transparenten Elements 6 durch Beschichtung aufgebracht sind. Die transparenten Leiterbahnen ermöglichen es, Stromstärken von mehr als 10A bis zu ca. 20A an eine Beleuchtungseinrichtung 14 zu übertragen. Die Beschichtung von Glas mit einer transparenten elektrisch leitenden Schicht ist grundsätzlich aus der WO 99/03111 bekannt. Die Strombahnen 10, 12 können auf dem transparenten Element 6 nach einem bestimmten Muster aufgebracht sein, um die Stromversorgung der Leuchtmittel 14 der Beleuchtungseinrichtung zu ermöglichen.

Bevorzugt besteht das Dachelement 4 bzw. das transparente Element 6 aus einem Verbundglas aus zwei Glasscheiben und einer dazwischen angeordneten isolierenden Kunststoffschicht, wobei dann die Leiterbahnen 10, 12 vollflächig auf jeweils eine der Glasscheiben aufgetragen werden kann.

Die Durchbrüche der unteren Scheibe 20, die die Leuchtmittel 14 aufweisen, weisen nach unten und sind so vor Witterungseinflüssen geschützt. Die Leuchtmittel 14 könnten an einer beliebigen Stelle des Dachelementes angeordnet sein und mit beiden Leiterbahnen 10, 12 kontaktieren, um mit Strom versorgt zu werden. Stromzuführende Elemente sind dann auf dem Dachelement 4 an keiner Stelle sichtbar.

Im Fall einer Isolierglasscheibe 23 könnten die Leuchtmittel 14 auch in dem Hohlraum zwischen den Scheiben der Isolierglasscheibe 23 angeordnet sein.

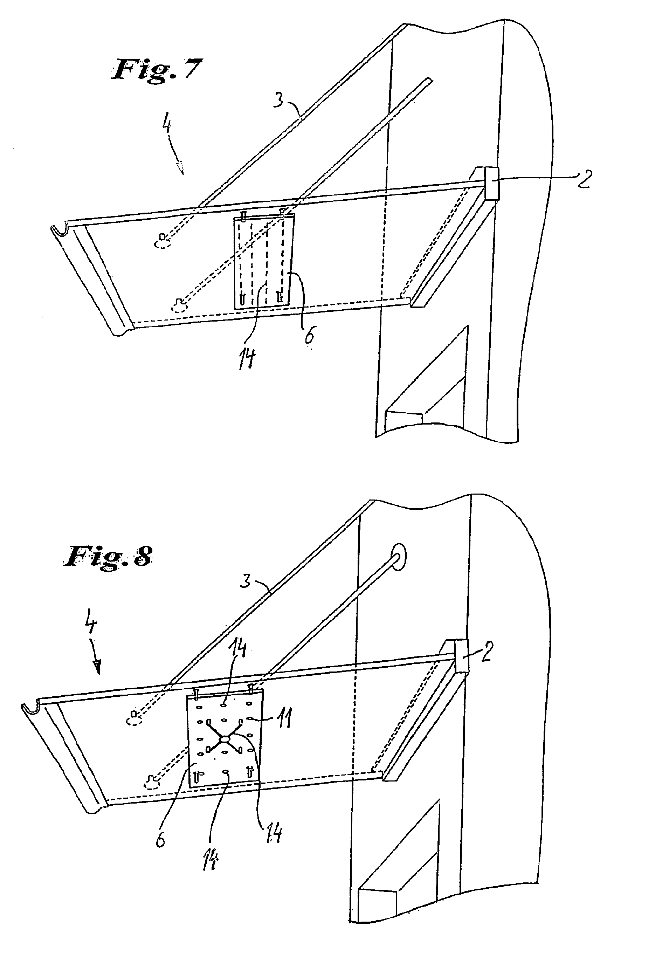

Fig. 7 zeigt ein alternatives Ausführungsbeispiel gemäß Fig. 6, bei dem die Leuchtmittel 14 in einem scheibenförmigen transparenten Element 6 angeordnet sind, das an dem Dachelement 4 befestigt ist.

In diesem Fall kann das Dachelement 4 selbst aus transparenten oder auch aus nicht transparentem Material bestehen und nur das scheibenförmige Element 6 transparent sein. Die Stromversorgung erfolgt dann unsichtbar über die Befestigungselemente des transparenten Elementes 8 und die transparenten Leiterbahnen 10, 12 sind dann in dem transparenten Element 6 und können auch zusätzlich in dem Dachelement 4 vorgesehen sein.

Fig. 8 ist ähnlich Figur 7. In dem scheibenförmigen transparenten Element sind mehrere LED-Dioden 14 vorgesehen, die in dem vorzugsweise aus einer Glasscheibe bestehenden Element 8 integriert sind. Zusätzliche Leuchtmittel 14 können auf der Unterseite des transparenten Elementes 8 befestigt sein und unsichtbar durch die Durchbrüche 11 mit Strom versorgt sein.

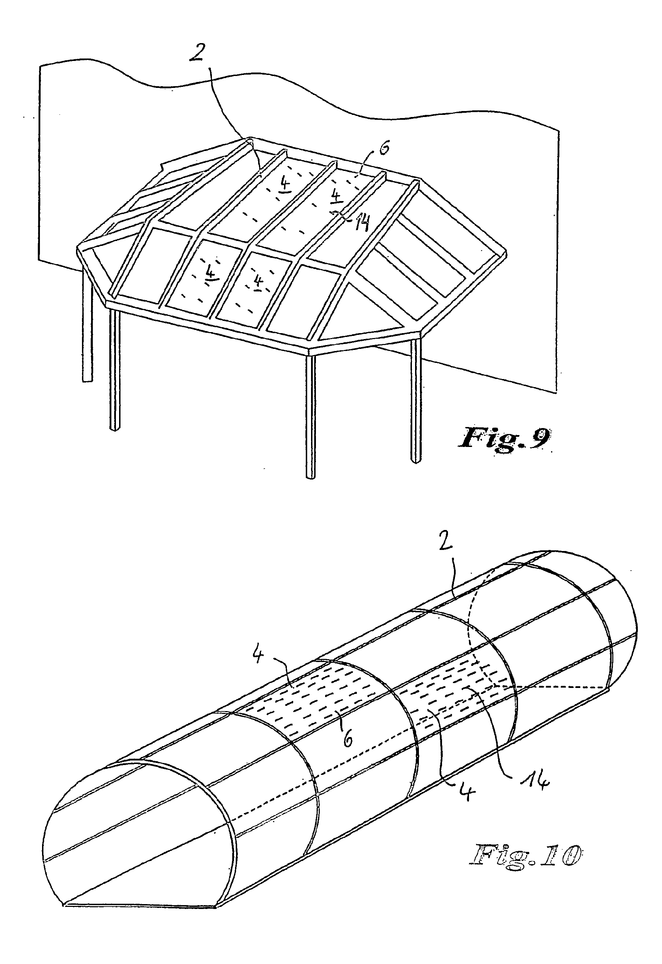

Fig. 9 zeigt die Integration von Dachelementen 4 in einen Wintergarten, wodurch es möglich ist, in einem Wintergarten eine beleuchtete Dachfläche zu schaffen ohne störende und sichtbare Stromzuführeinrichtungen und ohne separate Beleuchtungseinrichtungen auf den Trägern des Wintergartens vorzusehen.

Fig. 10 zeigt eine weitere Anwendung bei Fußgängerübergängen, wie sie auf Messegeländen auch zur Verbindung zweiter Gebäude bekannt sind.

Bei allen Ausführungsbeispielen, aber insbesondere bei Dachelementen 4 in Fußgängerübergängen können die Beleuchtungseinrichtungen auf den Dachelementen 4 auch derart angeordnet sein, dass sie mit Hilfe der LED-Dioden 18 eine Punktmatrix bilden, die Informationen anzeigt. Beispielsweise ist es möglich, Werbung oder andere Informationen computergesteuert per Laufschriftanzeige über die LED-Dioden 14 auf den Dachelementflächen darzustellen.

## Patentansprüche

1. Transparentes Element als Verbundglaselement, das zwei miteinander verbundene transparente Scheiben (20, 22) aufweist, wobei das transparente Element (6) wenigstens eine Aufnahme (5) für wenigstens einen Medienverbraucher (7) aufweist und die Medienzuführung (9) zur Versorgung des Medienverbrauchers (7) in das transparente Element (6) integriert ist, **dadurch gekennzeichnet, dass** die Medienzuführung (9) sich zwischen den Scheiben befindet und ein Lichtleiter ist, der den Medienverbraucher in Form eines Lichtaustritts versorgt.

2. Transparentes Element nach Anspruch 1, **dadurch gekennzeichnet, dass** es zwei Glasscheiben (20 22) aufweist, von denen eine Scheibe (20) als Aufnahme (5) einen Durchbruch hat, dass in oder an dem Durchbruch (11) der Medienverbraucher (7) angeordnet ist, dass zwischen beiden Scheiben (20, 22) ein ggf. die Scheiben miteinander verbindender, vorzugsweise mit einem isolierenden, tranpartenten Material gefüllter Zwischenraum (16) vorgesehen ist, in dem Zwischenraum die Medienzufuhr (9) verläuft, die den Medienverbraucher (7) durch den Durchbruch (11) hindurch versorgt.

3. Transparentes Element nach einem der vorhergehenden Ansprüche, **dadurch gekennzeichnet, dass** die durch die Aufnahme (5) durchbrochene Scheibe (20) mit wenigstens einer weiteren Scheibe (22) mittels einer Folie (16) flächig verklebend verbunden ist, wobei die Verbindung vorzugsweise durch Erwärmung unter Druck erfolgt.

4. Transparentes Element nach Anspruch 3, **dadurch gekennzeichnet, dass** die Scheiben (20, 23) sowie eine weitere Abdeckscheibe (22) für die mit Durchbrüchen (11) versehene Scheibe (20) durch ein Klemmsystem miteinander lösbar verbunden sind.

5. Transparentes Element nach einem der vorhergehenden Ansprüche, **dadurch gekennzeichnet, dass** bei mehreren Scheiben (20, 22, 23) mindestens eine Scheibe (20) den Durchbruch (11) aufweist und mindestens eine weitere ausschnittsfreie Scheibe (23) als Berührungsschutz dient.

6. Transparentes Element nach einem der vorhergehenden Ansprüche, **dadurch gekennzeichnet, dass** es ein Gebäudedach- bzw. Vordachelement ist.

## Claims

1. Transparent element as laminated glass element, having two transparent panes (20, 22) connected to one another, wherein the transparent element (6) has at least one receptacle (5) for at least one media consumer (7) and the media supply (9) for supplying the media consumer (7) is integrated into the transparent element (6), **characterized in that** the media supply (9) is situated between the panes and is an optical lightguide that supplies the media consumer in the form of a light exit.

2. Transparent element according to Claim 1, **characterized in that** it has two glass panes (20, 22), one pane (20) of which has a perforation as receptacle (5), **in that** the media consumer (7) is arranged in or at the perforation (11), **in that** an interspace (16) that connects the panes to one another, if appropriate, and is preferably filled with an insulating, transparent material is provided between the two panes (20, 22), the media supply (9) runs in the interspace, said media feed supplying the media consumer (7) through the perforation (11).

3. Transparent element according to either of the preceding claims, **characterized in that** the pane (20) perforated by the receptacle (5) is adhesively connected to at least one further pane (22) areally by means of a film (16), wherein the connection is preferably effected by heating under pressure.

4. Transparent element according to Claim 3, **characterized in that** the panes (20, 23) and also a further covering pane (22) for the pane (20) provided with perforations (11) are releaseably connected to one another by means of a clamping system.

5. Transparent element according to any of the preceding claims, **characterized in that** in the case of a plurality of panes (20, 22, 23) at least one pane (20) has the perforation (11) and at least one further, cutout-free pane (23) serves as protection against contact.

6. Transparent element according to any of the preceding claims, **characterized in that** it is a building roof element or canopy element.

## Revendications

1. Élément transparent sous la forme d'un élément en verre de sécurité feuilleté qui présente deux plaques (20, 22) transparentes assemblées ensemble, l'élément transparent (6) présentant au moins un logement (5) pour au moins un consommateur de médias (7) et l'acheminement des médias (9) destiné à alimenter le consommateur de médias (7) étant intégré dans l'élément transparent (6), **caractérisé en ce que** l'acheminement des médias (9) se trouve entre les plaques et est une fibre optique qui alimente le consommateur de médias sous la forme d'une émission de lumière.

2. Élément transparent selon la revendication 1, **caractérisé en ce qu'**il présente deux plaques en verre (20, 22) dont une plaque (20) présente comme logement (5) une traversée, **en ce que** le consommateur de médias (7) est disposé dans ou sur la traversée (11), **en ce qu'**il est prévu entre les deux plaques (20, 22) un espace intermédiaire (16) reliant éventuellement les plaques ensemble et de préférence rempli par un matériau transparent isolant, l'acheminement des médias (9) qui alimente le consommateur de médias (7) à travers la traversée (11) s'étendant dans l'espace intermédiaire.

3. Élément transparent selon l'une des revendications précédentes, **caractérisé en ce que** la plaque (20) traversée par le logement (5) est assemblée à plat par collage avec au moins une plaque supplémentaire (22) au moyen d'un film (16), l'assemblage s'effectuant de préférence par échauffement sous pression.

4. Élément transparent selon la revendication 3, **caractérisé en ce que** les plaques (20, 23) ainsi qu'une plaque de protection supplémentaire (22) pour la plaque (20) munie de traversées (11) sont assemblées ensemble de manière amovible par un système de pinces.

5. Élément transparent selon l'une des revendications précédentes, **caractérisé en ce que** dans le cas de plusieurs plaques (20, 22, 23), au moins une plaque (20) présente la traversée (11) et au moins une plaque supplémentaire sans découpe (23) fait office de protection au contact.

6. Élément transparent selon l'une des revendications précédentes, **caractérisé en ce qu'**il est un élément de toit de bâtiment ou d'avant-toit.
